# EUROPÄISCHE PATENTSCHRIFT

(11) **EP 1 263 188 B1**
(45) Veröffentlichungstag und Bekanntmachung des Hinweises auf die Patenterteilung: **30.11.2011**
(21) Anmeldenummer: 02100320.7
(22) Anmeldetag: 02.04.2002
(51) Int. Cl.: H04L 29/12, H04L 12/28, H04L 12/56

(54) **Verfahren zum Vermitteln von Daten zwischen einem lokalen Netzwerk und einem externen Gerät und Router dafür**
A method for transfering data between a local network and an external device and a router
Procédé de transfert de données entre un réseau local et un dispositif ou routeur externe

(30) Priorität: 20.04.2001 DE 10119447
(43) Veröffentlichungstag der Anmeldung: 04.12.2002
(73) Patentinhaber: Siemens Enterprise Communications GmbH & Co. KG, 81379 München (DE)
(72) Erfinder: Lindemann, Werner, Dr., 45473 Mühlheim (DE); Schönfeld, Norbert, 44145 Dortmund (DE)
(74) Vertreter: Fritzsche, Thomas

(56) Entgegenhaltungen:
- WO-A-00/36794
- WO-A-00/41418
- WO-A-00/77975
- US-A- 5 999 536
- US-A- 6 141 690

## Beschreibung

Die vorliegende Erfindung betrifft ein Verfahren zum Vermitteln von Daten zwischen Geräten eines paketorientierten lokalen Netzwerks und einem mit dem lokalen Netzwerk über einen Router verbundenen externen Gerät.

In lokalen Netzwerken wie z.B. sogenannten Intranets von Firmen stehen den einzelnen Nutzern meist umfangreiche gemeinsam nutzbare Datenbestände und Applikationen zur Verfügung. Daten werden zwischen den an das lokale Netzwerk angeschlossenen Geräten in Form von Paketen ausgetauscht.

Für die Leitung der Pakete innerhalb des lokalen Netzwerks werden zwei Typen von Adressen verwendet, die hier als Geräteadresse bzw. Netzwerkadresse bezeichnet werden. Die Geräteadresse ist für ein Gerät vom Hersteller fest vorgegeben und unveränderlich. Die Netzwerkadresse ist innerhalb des lokalen Netzwerks definiert und kann einem Gerät z.B. vom Netzadministrator willkürlich zugewiesen werden. In einem lokalen IP-Netzwerk hat die MAC-Adresse die Funktion einer Geräteadresse und die IP-Adresse die einer Netzwerkadresse.

Um externen Mitarbeitern einer Firma, z.B. Außendienstlern oder Heimarbeitern, einen Zugriff auf das Intranet zu ermöglichen, ist es wünschenswert, externe Geräte mit den gleichen Möglichkeiten und Zugriffsrechten an das Intranet anbinden zu können, die auch den direkt daran angeschlossenen Geräten zur Verfügung stehen. Ein bekannter Ansatz zur Lösung dieses Problems ist, ein als Home-Netz bezeichnetes zusätzliches Netz zu definieren, in dem dem externen Gerät eine Netzwerkadresse zugewiesen wird. Ein Router des lokalen Netzwerks, der mit dem Home-Netz verbindbar ist, erhält einen Eintrag, der bewirkt, wirkt, dass in dem lokalen Netzwerk zirkulierende, an das Home-Netz adressierte Pakete vom Router empfangen und an das Home-Netz weitergeleitet werden. Diese Lösung erfordert jedoch, dass für jedes externe Gerät, das mit dem lokalen Netzwerk kommunizieren soll, ein entsprechender Eintrag im Router vorgenommen wird.

Sofern das Home-Netz mit dem Router beispielsweise über eine Punkt-Zu-Punkt-(Wähl)-Verbindung verbindbar ist, ermöglicht es diese Lösung dem externen Gerät, Datenpakete in das lokale Netzwerk einzuspeisen und Antwortpakete darauf von Geräten des lokalen Netzwerks zu empfangen. Wenn jedoch ein Gerät des lokalen Netzwerks als Initiator einer Verbindung Daten an das externe Gerät schicken soll, so scheitert dies vielfach daran, dass die Home-Netz-Adresse zwar dem Router bekannt gemacht wurde, aber den Anwendern bzw. Geräten in dem lokalen Netzwerk nicht. Wenn das externe Gerät zeitweilig auch direkt an das lokale Netzwerk angeschlossen betrieben wird, wie etwa im Falle eines Mitarbeiters, der mit einem transportablen Computer zeitweise im Gebäude einer Firma mit direktem Zugriff auf das dortige lokale Netzwerk und zeitweise zu Haus arbeitet, ergibt sich das zusätzliche Problem, dass ein Anwender an einem Gerät des lokalen Netzwerks im allgemeinen nicht wissen kann, ob dieser Mitarbeiter bzw. sein Computer gerade zu Hause oder im lokalen Netzwerk erreichbar ist.

Wenn die Verbindung zwischen dem lokalen Netz und dem Home-Netz nicht über eine Punkt-zu-Punkt-Verbindung, sondern über andere paketorientierte Netze hergestellt wird, so ist ein weiteres Problem dieses Ansatzes, dass für eine korrekte Weiterleitung von Datenpaketen ein entsprechender Eintrag an jedem einzelnen Router erforderlich ist, dem das Datenpaket auf dem Weg zwischen dem lokalen Netz und dem externen Gerät durchläuft.

Da diese Router im allgemeinen nicht der Kontrolle des Betreibers des lokalen Netzwerks unterstehen, scheitert die oben beschriebene Lösung hier an einem prohibitiven Verwaltungsaufwand.

Aus der WO 00/36794A ist ein Verfahren und eine Einrichtung in einem Kommunikationsnetzwerk bekannt, bei dem ein Endgerät über eine drahtlose Schnittstelle mit einem IP- Netzwerk verbunden ist. Die Mobilität der Endgeräte wird dadurch erreicht, dass für die Dauer einer Verbindung dem Endgerät eine temporäre IP- Adresse und eine temporäre Adresse gemäß dem Protokoll, das unter der Schicht des IP- Protokolls liegt - beispielsweise die MAC- Adresse, zugeordnet wird und diese Adressen in einer Basissendeempfangsstation gespeichert werden.

In US-A-5 999 536 ist ein Router für eine schnelle Paketübertragung zwischen Endgeräten in verschiedenen lokalen Netzwerken beschrieben, bei dem die Vermittlung der Pakete auf der Basis einer Routingtabelle und einer ARP(Address Resolution Protocol)- Tabelle basiert. In einer weiteren Speichertabelle wird die IP- Adresse und die MAC- Adresse des Endgeräts, in dem das Endgerät aktuell angeschlossen ist, zusammen mit der IP- Adresse des Endgeräts in einem lokalen Netzwerk, das zu dem Router über einen anderen Router verbunden ist, und der MAC- Adresse des anderen Routers gespeichert. Die schnelle Paketübertragung wird erreicht, sofern die Zieladresse eines Pakets in der Speichertabelle registriert ist.

Aufgabe der vorliegenden Erfindung ist, ein Verfahren zum Vermitteln von Daten zwischen Geräten eines paketorientierten lokalen Netzwerks und einem mit dem lokalen Netzwerk über einen Router verbundenen externen Gerät und einen zur Durchführung des Verfahrens geeigneten Router anzugeben, die die Anbindung des externen Geräts an das lokale Netzwerk mit minimalem Verwaltungsaufwand ermöglichen.

Die Aufgabe wird zum einen gelöst durch ein Verfahren zum Vermitteln von Daten zwischen Geräten eines paketorientierten lokalen Netzwerks und einem mit dem lokalen Netzwerk über einen Router verbundenen externen Gerät, wobei die Geräte des lokalen Netzwerks einschließlich des Routers jeweils über eine Netzwerkadresse in dem lokalen Netzwerk und eine Geräteadresse verfügen, und wobei:
- eine Netzwerkadresse aus dem lokalen Netzwerk dem externen Gerät zugeordnet wird;
- eine die zugeordnete Netzwerkadresse betreffende Geräteadressenanforderung von an das lokale Netzwerk angeschlossenen Geräten mit der Geräteadresse des Routers beantwortet wird; und
- Pakete, die die zugeordnete Netzwerkadresse und die Geräteadresse des Routers als Zieladresse enthalten, aus dem lokalen Netzwerk über den Router an das externe Gerät weitergeleitet werden.

Für ein Gerät des lokalen Netzwerks, das ein Datenpaket an das externe Gerät zu schicken hat, besteht keinerlei Unterschied zwischen diesem externen Gerät und beliebigen anderen direkt mit dem lokalen Netzwerk verbundenen Geräten: In beiden Fällen wird zum Adressieren eines Pakets eine Netzwerkadresse des lokalen Netzwerks verwendet. Der Router ist anhand von Einträgen in einem Verzeichnis in der Lage, anhand der Ziel-Netzwerkadresse von Datenpaketen, die an seine Geräteadresse gesendet werden, das gewünschte Empfängergerät für ein solches Paket zu erkennen und dieses korrekt weiterzuleiten.

Komplementär hierzu werden von dem externen Gerät über den Router an das lokale Netzwerk gesendete Pakete mit der dem externen Gerät zugeordneten Netzwerkadresse und der Geräteadresse des Routers versehen in das lokale Netzwerk eingespeist.

Einer ersten Ausgestaltung der Erfindung zufolge kann vorgesehen sein, dass der Router mit dem externen Gerät über eine Punkt-zu-Punkt-Verbindung, insbesondere eine ISDN-Verbindung, kommuniziert. Bei dieser Ausgestaltung verfügt der Router zweckmäßigerweise über ein Verzeichnis, in dem jeweils in Verbindung mit einer lokalen Netzwerkadresse, deren Pakete er weiterleitet, ein Eintrag mit einer Rufnummer vorhanden ist, zu der er eine Verbindung aufbaut, wenn er an die zugeordnete Netzwerkadresse gerichtete Pakete aus dem lokalen Netz empfängt und eine entsprechende Verbindung noch nicht existiert.

Insbesondere im Falle einer ISDN-Verbindung, bei der eine Rufnummer des Anrufers einem angerufenen Endgerät signalisiert wird, kann vorgesehen werden, dass der Router einen solchen Rufnummerneintrag automatisch erzeugt, sobald er von einem hierzu legitimierten externen Gerät angerufen wird. Bevor er dies tut, überprüft er zweckmäßigerweise nach einem beliebigen, an sich bekannten Verfahren die Berechtigung des externen Geräts zum Zugriff auf das lokale Netzwerk. So kann z.B. ein Außendienstmitarbeiter, der sich an einer Vielzahl unterschiedlicher Orte aufhält, durch einfaches Herstellen einer Telefonverbindung zum Router den jeweils seinem Computer in dem Router zugeordneten Rufnummerneintrag aktualisieren und so die Erreichbarkeit seines Computers für die Geräte des lokale Netzwerks gewährleisten.

Einer zweiten Ausgestaltung zufolge kann der Router mit dem externen Gerät auch über ein zweites paketorientiertes Netzwerk, z.B. per Internet, kommunizieren. In diesem Falle muss dem externen Gerät in dem zweiten Netzwerk ebenfalls eine Netzwerkadresse zugeordnet sein. Beim Weiterleiten eines Pakets an das externe Gerät tauscht der Router daher zweckmäßigerweise die in dem Paket als Zieladresse ursprünglich enthaltene zugeordnete Netzwerkadresse des lokalen Netzwerks gegen die dem Gerät in dem zweiten Netzwerk zugeordnete Adresse aus. Diese ist für den Router z.B. aus einem von dem externen Gerät kommend empfangenen Paket als Absenderadresse enthalten. Ein entgegengesetzter Adressenaustausch findet beim Einspeisen eines vom externen Gerät kommenden Pakets in das lokale Netzwerk statt.

Selbstverständlich sind auch beide oben erwähnten Ausgestaltungen kombinierbar in dem Sinne, dass über die Punkt-zu-Punkt-Verbindung eine Verbindung des lokalen Netzwerks mit einem zweiten Netzwerk wie etwa dem eingangs erwähnten Home-Netzwerk hergestellt wird.

Ein besonderer Vorteil des erfindungsgemäßen Verfahrens und Routers ist, dass sie den Betrieb eines einzelnen Geräts abwechselnd als direkt an das lokalen Netzwerk angeschlossenes Gerät und als externes Gerät ermöglichen. D.h., ein Benutzer kann ein Gerät wie etwa einen tragbaren Computer sowohl direkt an das lokale Netzwerk anschließen als auch über ein zweites Netzwerk oder ein Telefonnetz eine Verbindung zu dem lokalen Netz herstellen und der transportable Computer kann Geräte des lokalen Netzwerks adressieren oder von ihnen adressiert werden, ohne dass hierfür aufwendige Konfigurierungsmaßnahmen im lokalen Netzwerk bzw. Router erforderlich sind.

Weitere Merkmale und Vorteile der vorliegenden Erfindung ergeben sich aus der nachfolgenden Beschreibung von Ausführungsbeispielen mit Bezug auf die beigefügten Figuren. Es zeigen:
- Fig. 1:: ein Blockdiagramm eines lokalen Netzwerks, in dem die vorliegende Erfindung anwendbar ist;
- Fig. 2: und 3: Flussdiagramme zur Veranschaulichung einer Verarbeitung von Daten, die von Geräten des lokalen Netzwerks an einen Router gesendet werden; und
- Fig. 4 bis 6:: Flussdiagramme von an dem Router durchgeführten Initialisierungsprozessen, die diesen befähigen, Datenpakete zwischen dem lokalen Netzwerk und einem externen Gerät zu vermitteln.

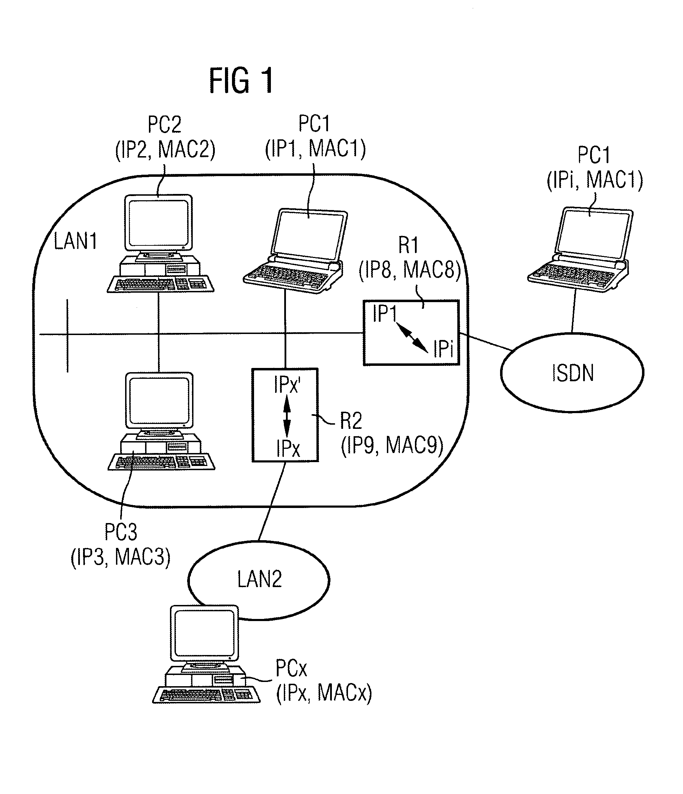

Das in Fig. 1 als Blockdiagramm dargestellte lokale Netz LAN1 umfasst eine Mehrzahl von Geräten, insbesondere Computern PC1, PC2, PC3, einen ISDN-Router R1 für die Datenübertragung zwischen dem lokalen Netzwerk LAN1 und einem ISDN-Fernmeldenetz ISDN, sowie einen Netzwerk-Router R2 für den Datenverkehr mit einem externen Netzwerk LAN2. Alle an das lokale Netzwerk LAN1 angeschlossenen Geräte PC1, PC2, PC3, R1, R2 verfügen über eine für das jeweilige Gerät fest vorgegebene Geräteadresse bzw. Geräteadresse MAC1, MAC2, MAC3, MAC8, MAC9 sowie eine Netzwerkadresse bzw. Netzwerkadresse IP1, IP2, IP3, IP8, IP9 im Falle eines lokalen Netzwerks mit IP-Struktur.

Zur Erläuterung der Erfindung wird angenommen, dass es sich bei dem in der Fig. 1 als Laptop dargestellten Computer PC1 um einen Computer handelt, der von seinem Benutzer zeitweilig direkt an das lokale Netzwerk LAN1 angeschlossen und zeitweilig mit dem lokalen Netzwerk LAN1 über eine ISDN-Verbindung und den ISDN-Router R1 verbunden betrieben wird. Der Computer PC1 ist in Fig. 1 entsprechend diesen zwei Anschlussmöglichkeiten zweimal dargestellt, wobei sich versteht, dass es sich um ein einziges Gerät handelt, das sich nur an jeweils einer der zwei gezeigten Positionen befinden kann.

Solange sich der Computer PC1 im lokalen Netz befindet, kann er über seine Adressen MAC1 und IP1 in herkömmlicher Weise mit den Geräten des lokalen Netzwerk LAN1 kommunizieren. D.h. er kann Datenpakete an die anderen Geräte PC2, PC3, R1, R2 des Netzwerks senden und Daten von diesen abfragen.

Wenn ein Gerät wie etwa PC2 oder PC3 Daten an den Computer PC1 schicken will, ohne dessen Geräteadresse zu kennen, so sendet es zunächst eine Broadcast-Adressenanforderung (auch als ARP-Request bezeichnet) in das lokale Netzwerk LAN1, die die dem Gerät PC2 oder PC3 bekannte Netzwerkadresse IP1 des Computers PC1 spezifiziert, um die zu der Netzwerkadresse IP1 gehörende Geräteadresse zu erfahren. Eine solche Anforderung wird von allen angeschlossenen Geräten empfangen, aber nur das Gerät mit der entsprechenden Netzwerkadresse antwortet und gibt seine Geräteadresse als Antwort auf die Anforderung aus. D.h., wenn der Computer PC1 an das lokalen Netz LAN1 angeschlossen ist, so kann er selbst die Adressenanforderung mit seiner Gerätedresse MAC1 beantworten.

Wenn der Computer PC1 nicht angeschlossen ist, so bleibt die Anforderung unbeantwortet, und Daten können nicht an den Computer PC1 gesendet werden, sofern keine weiteren Maßnahmen getroffen werden.

Wenn der Computer PC1 über das ISDN-Netz mit dem lokalen Netzwerk LAN1 verbunden ist, so findet der Datenaustausch zwischen ihm und den Geräten des lokalen Netzwerks LAN1 über den ISDN-Router R1 statt. Dessen Arbeitsweise wird im folgenden beschrieben.

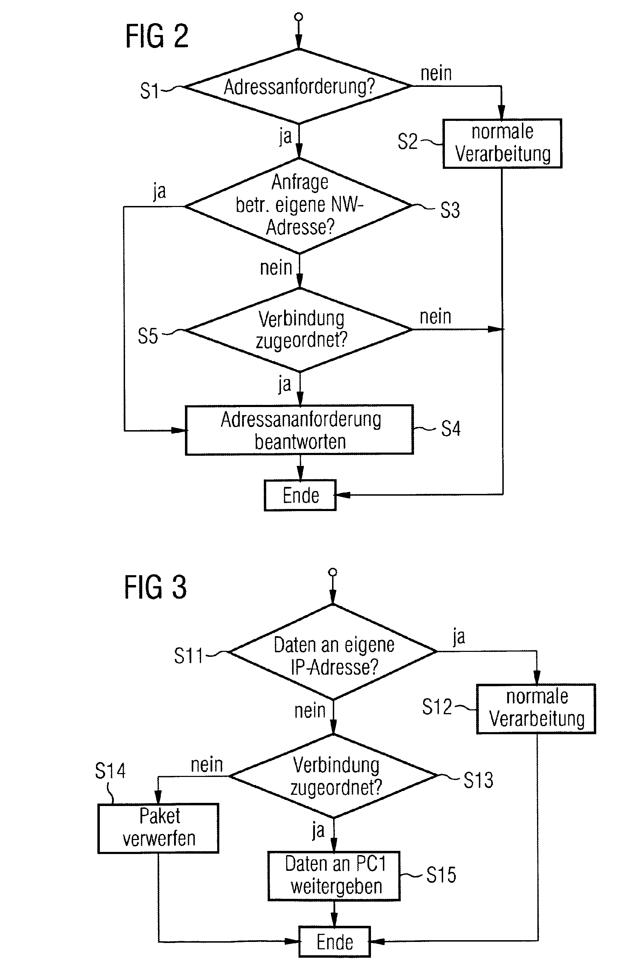

Fig. 2 zeigt in einem Flussdiagramm die Verarbeitung von im lokalen Netzwerk LAN1 mittels Broadcast übermittelten Daten im ISDN-Router R1. Zunächst wird in Schritt S1 festgestellt, ob es sich bei den Broadcast-Daten um eine Adressenanforderung (ARP Request) handelt oder nicht. Wenn nein, so werden diese Daten in einer Form (S2) weiterverarbeitet, die nicht Gegenstand der Erfindung ist und hier nicht beschrieben wird. Wenn der ISDN-Router R1 eine Adressenanforderung erkennt, so überprüft er in Schritt S3, ob die Anforderung sich auf seine eigene Netzwerkadresse IP8 bezieht. Wenn ja, so beantwortet der Router R1 die Anforderung, in dem er in Schritt S4 seine eigene Geräteadresse MAC8 ausgibt. Insoweit ist die Verarbeitung der Adressenanforderung durch den Router R1 identisch mit der, die auch von den anderen an das lokale Netzwerk LAN1 angeschlossenen Geräten durchgeführt wird.

Wenn aber der Router in Schritt S3 erkennt, dass die Anforderung sich nicht auf seine eigene Netzwerkadresse IP8 bezieht, so führt er einen weiteren Schritt S5 aus, in dem er überprüft, ob die nachgefragte Netzwerkadresse eventuell in einem internen Verzeichnis von Netzwerkadressen enthalten ist, deren zugeordnete Geräte über das ISDN-Netz erreichbar sind. Wenn dies nicht der Fall ist, endet die Verarbeitung, und der Router R1 liefert keine Antwort auf die Adressenanforderung. Wenn die Netzwerkadresse in dem Verzeichnis gefunden wird, verzweigt das Verfahren zu Schritt S4, und der Router R1 liefert eine Antwort auf die Adressenanforderung, in der er seine eigene Geräteadresse MAC8 als die gesuchte Geräteadresse ausgibt.

Dies führt dazu, dass das Gerät, das die Adressenanforderung gesendet hat, nun annimmt, dass zu der nachgefragten Netzwerkadresse die Geräteadresse MAC8 des Routers R1 gehört. D.h., wenn z.B. die nachgefragte Netzwerkadresse die Adresse IP1 des Computers PC1 war, der sich zeitweilig nicht direkt am lokalen Netz LAN1 befindet, sondern über das ISDN-Netz mit diesem verbunden ist, so senden die anderen Geräte des lokalen Netzwerks LAN1 von nun an für den Computer PC1 bestimmte Daten in Paketen, die als Zieladressen die Geräteadresse MAC8 des Routers R1 und die Netzwerkadresse IP1 des Computers PC1 enthalten.

Die Verarbeitung solcher an die Geräteadresse MAC8 des Routers R1 adressierter Pakete durch den Router R1 ist im Flussdiagramm der Fig. 3 dargestellt. Wenn dieser ein an seine Geräteadresse MAC8 adressiertes Paket empfängt, so überprüft er zunächst in Schritt S11, ob der Inhalt des Pakets auch an seine Netzwerkadresse IP8 adressiert ist, oder eventuell eine andere. Wenn die Ziel-Netzwerkadresse IP8 ist, so handelt es sich bei dem Paket um Daten, die lediglich für den Router R1, nicht aber für ein mit ihm über das ISDN-Netz verbindbares Gerät bestimmt sind, und die Daten werden vom Router R1 in Schritt S12 in herkömmlicher Weise weiterverarbeitet.

Handelt es sich bei der Netzwerkadresse nicht um die Adresse IP8 des Routers R1, so prüft der Router R1 in Schritt S13, ob die genannte Netzwerkadresse in seinem internen Verzeichnis enthalten ist oder nicht. Wenn nicht, so ist das Paket fehlerhaft adressiert und wird in Schritt S14 verworfen.

Wenn die Ziel-Netzwerkadresse in dem Verzeichnis vorhanden ist, so leitet der Router R1 das betreffende Paket in Schritt S15 über eine der spezifizierten Netzwerkadresse zugeordnete ISDN-Verbindung an das gewünschte Gerät weiter.

Dabei können gemäß einer ersten Variante der Erfindung in dem internen Verzeichnis des Routers R1 jeweils solche Netzwerkadressen verzeichnet sein, die einem externen Gerät zugeordnet sind, das aktuell eine ISDN-Verbindung zu dem Router R1 unterhält. D.h., wenn der Computer PC1 nicht direkt an das lokale Netzwerk LAN1 angeschlossen ist, können die Geräte PC2, PC3 nur dann mit dem Computer PC1 kommunizieren, wenn eine ISDN-Verbindung mit ihm besteht. Wenn der Computer PC1 diese Verbindung hergestellt hat, ist ein uneingeschränkter Datenaustausch zwischen den Geräten möglich; solange er dies nicht tut, haben die Geräte PC2, PC3 keine Möglichkeit, ihrerseits eine ISDN-Verbindung zu dem Computer PC1 aufzubauen. Eine solche Regelung kann z.B. zweckmäßig sein, wenn es sich bei dem Computer PC1 um den Computer eines Außendienstmitarbeiters handelt, der Verbindungen zum lokalen Netzwerk LAN1 von einer Vielzahl unterschiedlicher ISDN-Anschlüsse aus aufbaut, und bei dem nicht davon ausgegangen werden kann, dass er unter einer gegebenen Anschlussnummer längere Zeit erreichbar ist.

Eine alternative Lösung ist, in dem internen Verzeichnis des Routers R1 Netzwerkadressen externer Geräte jeweils in Verbindung mit einer Rufnummer zu speichern, unter der diese Geräte erreichbar sind. Bei dieser Ausgestaltung zerfällt der Schritt S15 des Weiterleitens von Daten vom lokalen Netzwerk LAN1 an das externe Gerät in die Schritte des Prüfens, ob eine ISDN-Verbindung zu diesem Gerät besteht, wenn ja, die Daten an das externe Gerät über die Verbindung weiterzuleiten, und wenn nein, zunächst eine Verbindung unter Verwendung der Rufnummer zu etablieren und die Daten anschließend weiterzuleiten.

Die Einspeisung von von dem externen Gerät gesendeten Datenpaketen in das lokale Netzwerk LAN1 kann in allen oben beschriebenen Fällen dadurch erfolgen, dass der Router R1 beim Ausgeben dieser Datenpakete an das lokale Netzwerk LAN1 sie mit der im Verzeichnis gespeicherten Netzwerkadresse und seiner eigenen Geräteadresse als Absenderadressen kennzeichnet.

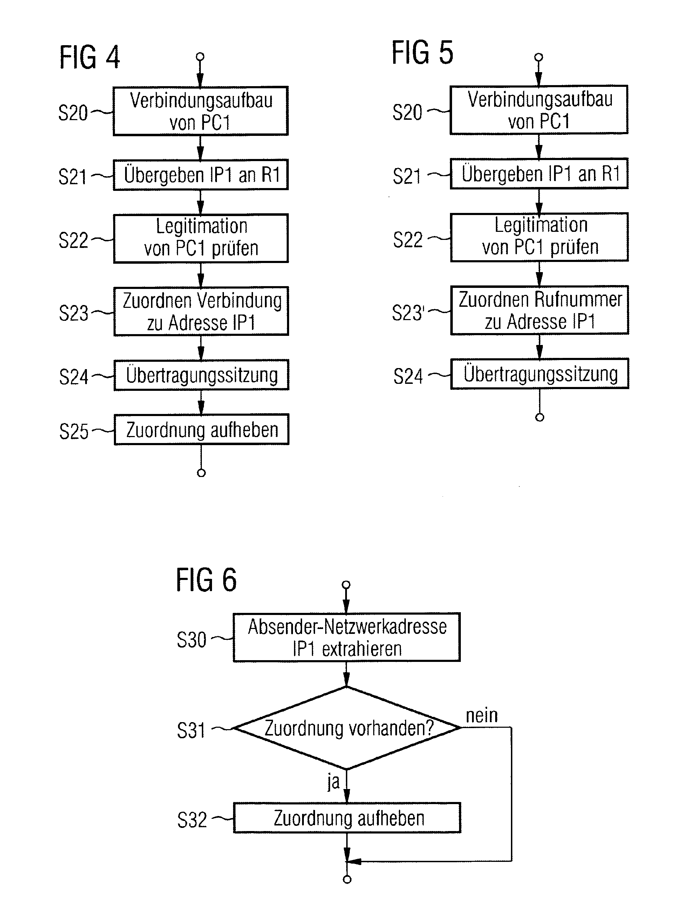

Das Flussdiagramm der Fig. 4 zeigt Arbeitsschritte des Routers R1 beim von einem externen Gerät ausgelösten Aufbau einer Verbindung mit dem lokalen Netzwerk LAN1. Sobald in Schritt S20 die ISDN-Verbindung zwischen dem extern betriebenen Computer PC1 und dem ISDN-Router R1 über das ISDN-Netz hergestellt ist, übergibt der Computer PC1 an den Router R1 die Netzwerkadresse IP1, unter der er erreichbar wäre, wenn er direkt am lokalen Netzwerk LAN1 betrieben würde.

Die Verwendung der Adresse IP1 gewährleistet für den Computer PC1 den Zugriff auf die Daten und Anwendungen des lokalen Netzwerks LAN1 mit den gleichen Zugriffsrechten, die er auch im direkt an das lokale Netzwerk LAN1 angeschlossenen Zustand hat.

Bedingt durch das Betriebssystem von PC1 kann es notwendig sein, bei transportablen Geräten PC1 zwei unterschiedliche IP-Adressen für eine LAN-Verbindung (IP1) und eine Wähl-Verbindung (IPi) zu vergeben. D.h. wenn der Computer PC1 direkt an das lokale Netzwerk LAN1 angeschlossen ist, verwendet er die Netzwerkadresse IP1, wenn er über eine Wählverbindung den Kontakt zum lokalen Netzwerk LAN1 herstellen muss, so verwendet er IPi als Absenderadresse. Eine Umwandlung von IPi nach IP1 und umgekehrt erfolgt dann durch den Router R1.

Bevor dem Computer PC1 jedoch der Zugriff auf das lokale Netzwerk LAN1 eingeräumt wird, findet in Schritt S22 eine Legitimationsprüfung statt, in der, z.B. durch Abfragen von Sperrwörtern, die Identität des Computers PC1 und seine Zugriffsberechtigung auf das lokale Netzwerk LAN1 überprüft werden.

Zur Vermeidung von Adresskonflikten kann im Rahmen des Schritts S22 zusätzlich vorgesehen werden, dass der Router R1 eine Adressanfrage (ARP Request) für die von dem Computer PC1 beanspruchte Netzwerkadresse IP1 in das lokale Netzwerk LAN1 ausgibt. Falls ein Gerät des lokalen Netzwerks LAN1 die Anfrage beantwortet, muss der Router R1 den Zugriff des Computers PC1 auf das lokale Netzwerk LAN1 abweisen.

Wenn die Prüfungen des Schritts S22 erfolgreich abgeschlossen sind, ordnet der Router R1 der ISDN-Verbindung zum Computer PC1 die lokale Netzwerkadresse IP1 zu. D.h. vom Computer PC1 empfangene Datenpakete werden vom Router R1 mit den Adressen IP1 und MAC8 in das lokale Netzwerk LAN1 eingespeist, so dass ein Gerät, das ein solches Paket empfängt, es mit Paketen beantworten kann, die IP1, MAC8 als Zieladressen enthalten. Genauso ist der Router R1 nun in der Lage, anhand der mit Bezug auf Figs. 2 und 3 beschriebenen Verfahren an die Netzwerkadresse IP1 adressierte Datenpakete anderer Geräte PC2, PC3 an den Computer PC1 weiterzuleiten.

Solange die ISDN-Verbindung besteht (Schritt S24) können die Geräte PC2, PC3 des lokalen Netzwerks LAN1 und der Computer PC1 in exakt der gleichen Weise miteinander kommunizieren, als wenn dieser direkt an das lokale Netzwerk LAN1 angeschlossen wäre. Sobald die ISDN-Verbindung aufgehoben wird, geht die Zuordnung verloren, Adressenanforderungen der Geräte PC2, PC3 für die Adresse IP1 können nicht mehr beantwortet werden, und der Computer PC1 ist für die Geräte PC2, PC3 nicht mehr erreichbar.

Fig. 5 zeigt eine Abwandlung des Verfahrens aus Fig. 4. Die Schritte S20 bis S22 sind die gleichen wie bereits mit Bezug auf Fig. 4 beschrieben, mit dem einzigen Unterschied, dass im Laufe des Aufbaus der ISDN-Verbindung in Schritt S20 auch eine Rufnummer des als externes Gerät betriebenen Computer PC1 an den Router R1 übertragen wird. Dieser speichert in Schritt S23' die Rufnummer in Zuordnung zu der lokalen Netzwerkadresse IP1, die von dem als externes Gerät betriebenen Computer PC1 verwendet wird. Solange die Verbindung besteht (S24) ist wie im Falle der Fig. 4 eine Kommunikation des extern betriebenen Computers PC1 mit den Geräten des lokalen Netzwerks LAN1 ohne Einschränkungen möglich. Wenn die ISDN-Verbindung wieder abgebaut wird, bleibt die Zuordnung der Rufnummer zu der lokalen Netzwerkadresse IP1 im Verzeichnis des Routers R1 bestehen. So ist der Router R1 bei Empfang einer die Netzwerkadresse IP1 betreffenden Adressenanforderung in der Lage, unter Verwendung dieser Rufnummer einen Verbindungsaufbau zu dem extern betriebenen Computer PC1 zu versuchen, und wenn dies gelingt, die Adressenanforderung mit seiner eigenen Geräteadresse MAC8 zu beantworten. Dies ermöglicht es den Geräten des lokalen Netzs LAN1, Daten an den externen Computer PC1 zu senden, ohne dass dieser hierfür vorher die Verbindung aufgebaut haben muss.

Selbstverständlich könnte diese Möglichkeit auch dadurch geschaffen werden, dass durch einen beliebigen anders gearteten Zugriff auf den Router R1 in dessen internem Verzeichnis eine Zuordnung der Netzwerkadresse IP1 zu einer Rufnummer hergestellt wird. Dies könnte z.B. durch direkten Eingriff eines Administrators erfolgen, denkbar wäre auch eine Übertragung der benötigten Rufnummer an den Router R1 von einem der am Netzwerk LAN1 lokal betriebenen Geräte PC2, PC3 aus.

Das Verfahren der Fig. 5 gewährleistet zwar eine bessere Erreichbarkeit des extern betriebenen Computers PC1 für die am lokalen Netzwerk LAN1 angeschlossenen Geräte, es ergibt sich jedoch das Problem, dass die in Schritt S23' getroffene Zuordnung der Adresse IP1 zu einer Rufnummer auch dann noch besteht, wenn der Computer PC1 wieder direkt am lokalen Netzwerk LAN1 betrieben werden soll. D.h., wenn dieser wieder an das lokale Netzwerk LAN1 angeschlossen ist und eine an die Netzwerkadresse IP1 gerichtete Adressenanforderung von einem der anderen Geräte ausgeht, so wird diese vom Computer PC1 mit seiner Geräteadresse MAC1 und gleichzeitig vom Router R1 mit dessen Geräteadresse MAC8 beantwortet. Um einen solchen Konflikt zu vermeiden, überwacht der Router R1 fortlaufend den Paketdatenverkehr auf dem lokalen Netzwerk LAN1. Wie in Fig. 6 dargestellt, extrahiert der Router aus jedem Paket auf dem lokalen Netzwerk LAN1 die Absender-Netzwerkadresse (S30). In Schritt S31 überprüft der Router R1, ob im internen Verzeichnis eine Zuordnung zu der extrahierten Netzwerkadresse existiert. Wenn der Absender des Pakets ein dauerhaft am lokalen Netzwerk LAN1 betriebenes Gerät wie etwa PC2 oder PC3 ist, ist das Ergebnis der Überprüfung negativ. Wenn der Absender des Pakets das zuvor extern betriebene Gerät PC1 ist, findet der Router R1 im internen Verzeichnis eine Zuordnung und löscht sie in Schritt S32. Dadurch ist gewährleistet, dass von nun an eine Adressenanforderung für die Adresse IP1 nur noch vom Computer PC1 beantwortet wird, nicht aber mehr vom Router R1.

Eine alternative Möglichkeit zum Vermeiden von Adressenkonflikten ist, dass der Router R1 von Zeit zu Zeit Adressenanforderungen zu den in seinem internen Verzeichnis gespeicherten Netzwerkadressen in das lokale Netzwerk LAN1 sendet. Wenn seit dem letzten Senden einer solchen Adressenanforderung ein Gerät an das lokale Netzwerk LAN1 angeschlossen worden ist, das über eine der gespeicherten Netzwerkadressen verfügt, z.B. der Computer PC1 mit der Netzwerkadresse IP1, so beantwortet dieses Gerät die Anforderung, und der Router R1 reagiert darauf, indem er die entsprechende Netzwerkadresse aus seinem Verzeichnis löscht.

Eine solche Adressenanforderung kann vom Router R1 zyklisch durchgeführt werden, oder sie kann dadurch ausgelöst werden, dass der Router R1 im lokalen Netzwerk LAN1 ein Paket erkennt, das als Absenderadresse eine im internen Verzeichnis des Routers R1 gespeicherte Netzwerkadresse in Kombination mit einer Geräteadresse enthält, die nicht die Geräteadresse MAC8 des Routers R1 ist. Wenn ein solcher Fall auftritt, so ist das ein Hinweis darauf, das ein Gerät neu an das lokale Netzwerk LAN1 angeschlossen worden sein könnte und eine Aktualisierung des internen Verzeichnisses erforderlich ist.

Eine solche Adressenanforderung kann auch dadurch ausgelöst werden, dass der Router R1 eine Anforderung zum Aufbau einer ISDN-Verbindung von einem externen Gerät empfängt, dem im internen Verzeichnis eine Netzwerkadresse wie etwa IP1 zugeordnet ist oder das dem Router signalisiert, das es zum Gebrauch der Netzwerkadresse IP1 berechtigt ist. In einem solchen Fall prüft der Router durch Aussenden einer Adressenanforderung zu der Netzwerkadresse IP1 in das lokale Netzwerk LAN1, ob ein lokal angeschlossenes Gerät die Netzwerkadresse IP1 verwendet, und weist, wenn dies der Fall ist, die Verbindungsanforderung des externen Geräts ab.

Eine weitere Möglichkeit, Adressenkonflikte zu vermeiden, ist die Einführung eines Anmeldeverfahrens, bei dem ein an das lokale Netzwerk LAN1 neu angeschlossenes Gerät seine Netzwerkadresse selbsttätig dem Router R1 meldet und dieser daraufhin seinen gegebenenfalls der gemeldeten Adresse entsprechenden Eintrag in seinem Verzeichnis löscht.

Die vorliegende Erfindung ist oben speziell auf den Fall eines Routings über ISDN-Verbindungen beschrieben worden. Es liegt jedoch auf der Hand, dass sie in gleicher Weise auf beliebige andere Punkt-zu-Punkt-Verbindungen anwendbar ist.

Sie ist auch auf den Fall einer paketorientierten Verbindung zwischen dem lokalem Netz LAN1 und externem Gerät anwendbar, wie etwa auf eine Verbindung zwischen einem externen Computer PCx mit Adressen MACx und IPx und dem Netzwerk-Router R2 des in Fig. 1 gezeigten lokalen Netzwerk LAN1 über ein Netzwerk LAN2. So kann in ähnlicher Weise wie beim Computer PC1, dem unabhängig davon, ob er direkt am lokalen Netzwerk LAN1 oder extern betrieben wird, eine Netzwerkadresse IP1 im lokalen Netzwerk LAN1 zugeordnet ist, für den Computer PCx, der zwar an das Netzwerk LAN2 angeschlossen ist, aber über Zugriffsrechte im lokalen Netzwerk LAN1 verfügt, eine Netzwerkadresse IPx' im lokalen Netzwerk LAN1 reserviert sein, die im allgemeinen von der Adresse IPx des Computers PCx im Netzwerk LAN2 verschieden sein wird.

Wenn der Computer PCx an den Netzwerk-Router R2 ein Paket mit der für ihn reservierten Adresse Ipx' überträgt, so kann dieser in analoger Weise wie oben mit Bezug auf Fig. 4, Schritt 23 beschrieben, eine Zuordnung zwischen der reservierten Adresse IPx' und der Adresse IPx herstellen, die in vom Computer PCx gesendeten Paketen als Absenderadresse enthalten ist. Wenn eine solche Zuordnung im Netzwerk-Router R2 existiert, ist dieser in der Lage, in Datenpaketen, die er vom Computer PCx empfängt, die Absenderadressen durch die reservierte Netzwerkadresse IPx' und die Geräteadresse MAC9 des Netzwerk-Routers R2 zu ersetzen, und diese ins lokale Netzwerk LAN1 einzuspeisen, und umgekehrt Adressenanforderungen von Geräten des lokalen Netzwerks LAN1, die die reservierte Adresse IPx' betreffen, mit seiner eigenen Geräteadresse MAC9 zu beantworten, um anschließend an die Zieladressenkombination IPx', MAC9 gerichtete Pakete an die dem Computer PCx im Netzwerk LAN2 entsprechende Adresse IPx umadressiert in das Netzwerk LAN2 weiterzuleiten. D.h. wenn die Netzwerkadresse IPx' im lokalen Netzwerk LAN1 nicht belegt ist, sei es weil ein Gerät, dem diese Adresse zugewiesen ist, nicht vorhanden oder ausgeschaltet ist, so leitet der Netzwerk-Router R2 für diese Netzwerkadresse bestimmte Pakete automatisch an den Computer PCx weiter.

Der Computer PCx ist auf diese Weise für die Geräte des lokalen Netzwerks LAN1 in der gleichen Weise erreichbar wie ein direkt an dieses lokale Netzwerk LAN1 angeschlossenes Gerät. Er verfügt im lokalen Netzwerk LAN1 über die Zugriffsrechte, die ein direkt an das lokale Netzwerk LAN1 angeschlossenes Gerät mit Netzwerkadresse Ipx' hätte. Ein Mitarbeiter könnte daher entweder am Computer PCx oder einem (nicht dargestellten), direkt an das LAN1 angeschlossenen Computer mit Netzwerkadresse IPx' arbeiten und hätte an beiden Computern stets identische Zugriffsrechte. Jede Änderung der Zugriffsrechte für die Netzwerkadresse IPx' wirkt in gleicher Weise für beide Computer.

## Patentansprüche

1. Verfahren zum Vermitteln von Daten zwischen Geräten (PC2, PC3) eines paketorientierten lokalen Netzwerks (LAN1) und einem mit dem lokalen Netzwerk (LAN1) über einen Router (R1, R2) verbundenen externen Gerät (PC1, PCx), wobei die Geräte (PC2, PC3) des lokalen Netzwerks (LAN1) einschließlich des Routers (R1, R2) jeweils über eine Netzwerkadresse (IP2, IP3, IP8, IP9) und eine Geräteadresse (MAC2, MAC3, MAC8, MAC9) verfügen, mit den Schritten:
- Zuordnen einer Netzwerkadresse (IP1, IPx') zu dem externen Gerät (PC1, PCx);
- Beantworten einer die zugeordnete Netzwerkadresse (IP1, IPx') betreffenden Geräteadressenanforderung (ARP request) mit der Geräteadresse (MAC8, MAC9) des Routers (R1, R2);
- Weiterleiten von die zugeordnete Netzwerkadresse (IP1, IPx') und die Geräteadresse (MAC8, MAC9) des Routers (R1, R2) als Zieladressen enthaltenden Paketen aus dem lokalen Netz (LAN1) über den Router (R1, R2) an das externe Gerät PC1, PCx).

2. Verfahren nach Anspruch 1,
**dadurch gekennzeichnet,**
**dass** von dem externen Gerät (PC1, PCx) über den Router (R1, R2) an das lokale Netzwerk (LAN1) gesendete Pakete mit der zugeordneten Netzwerkadresse (IP1, IPx') und der Geräteadresse (MAC8, MAC9) des Routers (R1, R2) versehen in das lokale Netzwerk (LAN1) eingespeist werden.

3. Verfahren nach Anspruch 1 oder 2,
**dadurch gekennzeichnet,**
**dass** der Router (R1) mit dem externen Gerät (PCx) über eine Punkt-zu-Punkt-Verbindung (ISDN) kommuniziert.

4. Verfahren nach Anspruch 1 oder 2,
**dadurch gekennzeichnet,**
**dass** der Router (R2) mit dem externen Gerät (PCx) über ein zweites paketorientiertes Netzwerk (LAN2) kommuniziert.

5. Verfahren nach Anspruch 4,
**dadurch gekennzeichnet,**
**dass** der Router (R2) beim Weiterleiten eines Pakets an das externe Gerät (PCx) die als Zieladresse enthaltene zugeordnete Netzwerkadresse (IPx') gegen eine über das zweite Netzwerk (LAN2) empfangene Netzwerkadresse (IPx) des externen Geräts (PCx) austauscht.

6. Verfahren nach einem der vorhergehenden Ansprüche,
**dadurch gekennzeichnet,**
**dass** der Router (R1, R2) beim Einspeisen eines Pakets in das lokale Netzwerk (LAN1) eine als Absenderadresse enthaltene Adresse (IPi, IPx) gegen die zugeordnete Adresse (IP1, IPx') austauscht.

7. Verfahren nach einem der vorhergehenden Ansprüche,
**dadurch gekennzeichnet,**
**dass** der Router (R1, R2) bei Empfang eines Pakets, das die zugeordnete Netzwerkadresse (IP1, IPx') als Absenderadresse enthält, aus dem lokalen Netzwerk (LAN1) die Zuordnung der Netzwerkadresse (IP1, IPx') zu dem externen Gerät aufhebt.

8. Verfahren nach einem der vorhergehenden Ansprüche,
**dadurch gekennzeichnet,**
**dass** der Router (R1, R2) bei Empfang einer Zuordnungsanweisung aus dem lokalen Netzwerk (LAN1) oder von dem externen Gerät (S22) die Zuordnung der Netzwerkadresse (IP1, IPx') zu dem externen Gerät (PC1, PCx) herstellt (S23, S23').

9. Router zum Vermitteln von Daten zwischen Geräten (PC2, PC3) eines lokalen Netzwerks (LAN1) und einem mit dem lokalen Netzwerk (LAN1) über einen Router (R1, R2) verbundenen externen Gerät (PC1, PCx),
wobei die Geräte (PC2, PC3) des lokalen Netzwerks einschließlich des Routers (R1, R2) jeweils über eine Netzwerkadresse (IP2, IP3, IP8, IP9) in dem lokalen Netzwerk (LAN1) und eine Geräteadresse (MAC2, MAC3, MAC8, MAC9) verfügen,
**dadurch gekennzeichnet,**
**dass** der Router (R1, R2) mit einem Verzeichnis für eine einem externen Gerät (PC1, PCx) zugeordnete Netzwerkadresse (IP1, IPx`) ausgestattet ist und eingerichtet ist,
- eine die zugeordnete Netzwerkadresse (IP, IPx') betreffende Geräteadressanforderung (ARP request) mit der Geräteadresse (MAC8, MAC9) des Routers (R1, R2) zu beantworten; und
- Pakete, die die zugeordnete Netzwerkadresse (IP1, IPx') und die Geräteadresse (MAC8, MAC9) des Routers (R1, R2) als Zieladressen enthalten, aus dem lokalen Netzwerk (LAN1) an das externe Gerät (PC1, PCx) weiterzuleiten.

10. Router nach Anspruch 9,
**dadurch gekennzeichnet,**
**dass** er eingerichtet ist, von dem externen Gerät (PC1, PCx) an das lokale Netzwerk (LAN1) gesendete Pakete mit der zugeordneten Netzwerkadresse (IP1, IPx') und der Geräteadresse (MAC8, MAC9) des Routers (R1, R2) zu versehen und in das lokale Netzwerk (LAN1) einzuspeisen.

11. Router nach Anspruch 9 oder 10,
**dadurch gekennzeichnet,**
**dass** er mit dem externen Gerät (PC1) über eine Punkt-zu-Punkt-Verbindung (ISDN) verbunden werden kann.

12. Router nach Anspruch 11,
**dadurch gekennzeichnet,**
**dass** in dem Verzeichnis in Verbindung mit einer zugeordneten Netzwerkadresse (IP1) eine Rufnummer gespeichert ist.

13. Router nach Anspruch 9 oder 10,
**dadurch gekennzeichnet,**
**dass** er mit dem externen Gerät über ein zweites paketorientiertes Netzwerk (LAN 2) verbunden werden kann.

14. Router nach Anspruch 13,
**dadurch gekennzeichnet,**
**dass** er mit einem Verzeichnis für eine dem externen Gerät (PCx) in dem zweiten Netzwerk (LAN2) zugeordnete Netzwerkadresse (IPx) ausgestattet ist und eingerichtet ist, beim Übergang eines für das externe Gerät (PCx) bestimmten Pakets in das zweite Netzwerk (LAN2) die in dem Paket als Zieladresse enthaltene, im lokalen Netzwerk (LAN1) zugeordnete Netzwerkadresse (IPx') des externen Geräts gegen die in dem zweiten Netzwerk (LAN2) zugeordnete Netzwerkadresse (IPx) auszutauschen und/oder beim Übergang eines von dem externen Gerät (PCx) stammenden Pakets in das lokale Netzwerk (LAN1) die in dem Paket als Absenderadresse enthaltene, im zweiten Netzwerk (LAN2) zugeordnete Netzwerkadresse (IPx) gegen die im lokalen Netzwerk zugeordnete Netzwerkadresse (IPx') auszutauschen.

15. Router nach einem der Ansprüche 9 bis 14,
**dadurch gekennzeichnet,**
**dass** das Verzeichnis durch aus dem lokalen Netzwerk (LAN1) oder von dem externen Gerät (PC1, PC2) empfangene Informationen geändert wird.

## Claims

1. Method for transferring data between devices (PC2, PC3) of a packet-oriented local network (LAN1) and an external device (PC1, PCx) connected to the local network (LAN 1) through a router (R1, R2), wherein the devices (PC2, PC3) of the local network (LAN1) including the router (R1, R2) each have a network address (IP2, IP3, IP8, IP9) and a device address (MAC2, MAC3, MAC8, MAC9), with the following steps:
- assigning a network address (IP1, IPx') to the external device (PC1, PCx);
- responding to a device address request (ARP request) concerning the assigned network address (IP1, IPx') with the device address (MAC8, MAC9) of the router (R1, R2);
- forwarding of packets, which contain the assigned network address (IP1, IPx') and the device address (MAC8, MAC9) of the router (R1, R2) as target addresses, from the local network (LAN1) through the router (R1, R2) to the external device (PC1, PCx).

2. Method according to claim 1,
**characterised in**
**that** packets sent from the external device (PC1, PCx) through the router (R1, R2) to the local network (LAN1) are provided with the assigned network address (IP1, IPx') and the device address (MAC8, MAC9) of the router (R1, R2) and thus introduced into the local network (LAN1).

3. Method according to claim 1 or 2,
**characterised in**
**that** the router (R1) communicates with the external device (PCx) through a point-to-point connection (ISDN).

4. Method according to claim 1 or 2,
**characterised in**
**that** the router (R2) communicates with the external device (PCx) through a second packet-oriented network (LAN2).

5. Method according to claim 4,
**characterised in**
**that** the router (R2), while forwarding a packet to the external device (PCx), exchanges the assigned network address (IPx'), which is contained as a target address, for a network address (IPx) of the external device (PCx), said network address being received through the second network (LAN2).

6. Method according to one of the preceding claims,
**characterised in**
**that** the router (R1, R2), while introducing a packet into the local network (LAN1), exchanges an address (IPi, IPx), which is contained as a sender address, for the assigned address (IP1, IPx').

7. Method according to one of the preceding claims,
**characterised in**
**that** the router (R1, R2), while receiving a packet which contains the assigned network address (IP1, IPx') as a sender address, cancels, from the local network (LAN1), the assignment of the network address (IP1, IPx') to the external device.

8. Method according to one of the preceding claims,
**characterised in**
**that** the router (R1, R2), while receiving an assignment instruction from the local network (LAN1) or from the external device (S22), makes the assignation (S23, S23') of the network address (IP1, IPx') to the external device (PC1, PCx).

9. Router for transferring data between devices (PC2, PC3) of a local network (LAN1) and an external device (PC1, PCx) connected to the local network (LAN1) through a router (R1, R2),
wherein the devices (PC2, PC3) of the local network including the router (R1, R2) each have a network address (IP2, IP3, IP8, IP9) in the local network (LAN1) and a device address (MAC2, MAC3, MAC8, MAC9),
**characterised in**
**that** the router (R1, R2) is equipped with a directory for a network address (IP1, IPx') assigned to an external device (PC1, PCx) and set up
- to respond to a device address request (ARP request) concerning the assigned network address (IP, IPx') with the device address (MAC8, MAC9) of the router (R1, R2); and
- to forward packets, which contain the assigned network address (IP1, IPx') and the device address (MAC8, MAC9) of the router (R1, R2) as target addresses, from the local network (LAN1) to the external device (PC1, PCx).

10. Router according to claim 9,
**characterised in**
**that** it is set up to provide packets, which are sent from the external device (PC1, PCx) to the local network (LAN1), with the assigned network address (IP1, IPx') and the device address (MAC8, MAC9) of the router (R1, R2) and to introduce them into the local network (LAN1).

11. Router according to claim 9 or 10,
**characterised in**
**that** it can be connected to the external device (PC1) through a point-to-point connection (ISDN).

12. Router according to claim 11,
**characterised in**
**that** the directory, in connection with an assigned network address (IP1), has a call number stored in it.

13. Router according to claim 9 or 10,
**characterised in**
**that** it can be connected to the external device through a second packet-oriented network (LAN2).

14. Router according to claim 13,
**characterised in**
**that** it is equipped with a directory for a network address (IPx) assigned to the external device (PCx) in the second network (LAN2) and set up to exchange, during the transition of a packet intended for the external device (PCx) to the second network (LAN2), the network address (IPx') of the external device contained in the packet as a target address and assigned in the local network (LAN1) for the network address (IPx) assigned in the second network (LAN2) and/or to exchange, during the transition of a packet originating from the external device (PCx) to the local network (LAN1), the network address (IPx) contained in the packet as a sender address and assigned in the second network (LAN2) for the network address (IPx') assigned in the local network.

15. Router according to one of the claims 9 to 14,
**characterised in**
**that** the directory is changed through information received from the local network (LAN1) or by the external device (PC1, PC2).

## Revendications

1. Procédé de transfert de données entre des appareils (PC2, PC3) d'un réseau local orienté paquets (LAN1) et un appareil externe (PC1, PCx) relié au réseau local (LAN1) par le biais d'un routeur (R1, R2), les appareils (PC2, PC3) du réseau local (LAN1) y compris le routeur (R1, R2) disposant chacun d'une adresse de réseau (IP2, IP3, IP8,
IP9) et d'une adresse d'appareil (MAC2, MAC3, MAC8, MAC9), avec les étapes consistant à :
- allouer une adresse de réseau (IP1, IPx') à l'appareil externe (PC1, PCx) ;
- répondre à une demande d'adresse d'appareil (ARP request) concernant l'adresse de réseau allouée (IP1, IPx') avec l'adresse d'appareil (MAC8, MAC9) du routeur (R1, R2) ;
- par le biais du routeur (R1, R2), transmettre à l'appareil externe (PC1, PCx), à partir du réseau local (LAN1), des paquets contenant l'adresse de réseau allouée (IP1, IPx') et l'adresse d'appareil (MAC8, MAC9) du routeur (R1, R2) en tant qu'adresses cibles.

2. Procédé selon la revendication 1, **caractérisé en ce que**
des paquets, envoyés par l'appareil externe (PC1, PCx) par le biais du routeur (R1, R2) au réseau local (LAN1) et dotés de l'adresse de réseau allouée (IP1, IPx') et de l'adresse d'appareil (MAC8, MAC9) du routeur (R1, R2) sont introduits dans le réseau local (LAN1).

3. Procédé selon la revendication 1 ou 2, **caractérisé en ce que**
le routeur (R1) communique avec l'appareil externe (PCx) par le biais d'une liaison point à point (ISDN).

4. Procédé selon la revendication 1 ou 2, **caractérisé en ce que**
le routeur (R2) communique avec l'appareil externe (PCx) par le biais d'un deuxième réseau orienté paquets (LAN2).

5. Procédé selon la revendication 4, **caractérisé en ce que**,
lors de la transmission d'un paquet à l'appareil externe (PCx), le routeur (R2) échange l'adresse de réseau (IPx') allouée contenue en tant qu'adresse cible contre une adresse de réseau (IPx) de l'appareil externe (PCx) reçue par le biais du deuxième réseau (LAN2).

6. Procédé selon l'une quelconque des revendications précédentes, **caractérisé en ce que**, lors de l'introduction d'un paquet dans le réseau local (LAN1), le routeur (R1, R2) échange une adresse (IPi, IPx) contenue en tant qu'adresse de l'expéditeur contre l'adresse allouée (IP1, IPx').

7. Procédé selon l'une quelconque des revendications précédentes, **caractérisé en ce que**, lors de la réception, en provenance du réseau local (LAN1), d'un paquet qui contient l'adresse de réseau allouée (IP1, IPx') en tant qu'adresse de l'expéditeur, le routeur (R1, R2) supprime l'allocation de l'adresse de réseau (IP1, IPx') à l'appareil externe.

8. Procédé selon l'une quelconque des revendications précédentes, **caractérisé en ce que**,
lors de la réception d'une instruction d'allocation provenant du réseau local (LAN1) ou de l'appareil externe (S22), le routeur (R1, R2) crée l'allocation de l'adresse de réseau (IP1, IPx') à l'appareil externe (PC1, PCx) (S23, S23').

9. Routeur pour transférer des données entre des appareils (PC2, PC3) d'un réseau local (LAN1) et un appareil externe (PC1, PCx) relié au réseau local (LAN1) par le biais d'un routeur (R1, R2),
les appareils (PC2, PC3) du réseau local y compris le routeur (R1, R2) disposant chacun d'une adresse de réseau (IP2, IP3, IP8, IP9) dans le réseau local (LAN1) et d'une adresse d'appareil (MAC2, MAC3, MAC8, MAC9),
**caractérisé en ce que**
le routeur (R1, R2) est doté d'un répertoire pour une adresse de réseau (IP1, IPx') allouée à un appareil externe (PC1, PCx) et est conçu pour :
- répondre à une demande d'adresse d'appareil (ARP request) concernant l'adresse de réseau allouée (IP, IPx') avec l'adresse d'appareil (MAC8, MAC9) du routeur (R1, R2) ; et
- transmettre à l'appareil externe (PC1, PCx) des paquets, en provenance du réseau local (LAN1), qui contiennent l'adresse de réseau allouée (IP1, IPx') et l'adresse d'appareil (MAC8, MAC9) du routeur (R1, R2) en tant qu'adresses cibles.

10. Routeur selon la revendication 9, **caractérisé en ce que**
il est conçu pour doter des paquets, envoyés au réseau local (LAN1) par l'appareil externe (PC1, PCx), de l'adresse de réseau allouée (IP1, IPx') et de l'adresse d'appareil (MAC8, MAC9) du routeur (R1, R2) et pour les introduire dans le réseau local (LAN1).

11. Routeur selon la revendication 9 ou 10, **caractérisé en ce que**,
il peut être relié à l'appareil externe (PC1) par le biais d'une liaison point à point (ISDN).

12. Routeur selon la revendication 11, **caractérisé en ce que**
un numéro d'appel est enregistré dans le répertoire en conjonction avec une adresse de réseau allouée (IP1).

13. Routeur selon la revendication 9 ou 10, **caractérisé en ce que**
il peut être relié à l'appareil externe par le biais d'un deuxième réseau orienté paquets (LAN2).

14. Routeur selon la revendication 13, **caractérisé en ce que**
il est équipé d'un répertoire pour une adresse de réseau (IPx) allouée dans le deuxième réseau (LAN2) à l'appareil externe (PCx) et il est conçu, lors du passage d'un paquets destiné à l'appareil externe (PCx) dans le deuxième réseau (LAN2), pour échanger l'adresse de réseau (IPx') de l'appareil externe, allouée dans le réseau local (LAN1) et contenue dans le paquet en tant qu'adresse cible, contre l'adresse de réseau (IPx) allouée dans le deuxième réseau (LAN2) et/ou, lors du passage dans le réseau local (LAN1) d'un paquet provenant de l'appareil externe (PCx), pour échanger l'adresse de réseau (IPx), allouée dans le deuxième réseau (LAN2) et contenue dans le paquet en tant qu'adresse de l'expéditeur, contre l'adresse de réseau (IPx') allouée dans le réseau local.

15. Routeur selon l'une des revendications 9 à 14, **caractérisé en ce que**
le répertoire est modifié par des informations reçues du réseau local (LAN1) ou par l'appareil externe (PC1, PC2).
